# EUROPÄISCHE PATENTANMELDUNG

(11) **EP 3 827 913 A1**
(43) Veröffentlichungstag der Anmeldung: **02.06.2021**
(21) Anmeldenummer: 19212445.1
(22) Anmeldetag: 29.11.2019
(51) Int. Cl.: B22D 17/04, B22D 17/22, B22D 17/20

(54) **SPRITZGUSSSYSTEM FÜR DEN SPRITZGUSS VON AMORPHEN METALLEN**

(71) Anmelder: Heraeus Deutschland GmbH & Co KG, 63450 Hanau (DE)
(72) Erfinder: BIEN, Elena, 63450 Hanau (DE); WACHTER, Dr. Hans-Jürgen, 63450 Hanau (DE); MILKE, Dr. Eugen, 63450 Hanau (DE); SHAKUR SHAHABI, Dr. Hamed, 63450 Hanau (DE); PIETSCH, Christian, 63450 Hanau (DE)
(74) Vertreter: Maiwald Patent- und Rechtsanwaltsgesellschaft mbH

(57) **Zusammenfassung**

Die vorliegende Erfindung betrifft ein Spritzgusssystem für den Spritzguss von amorphen Metallen, eine Spritzgusseinheit für den Spritzguss von amorphen Metallen und ein Spritzgussverfahren für amorphe Metalle.

Das Spritzgusssystem umfasst einen Kanal zum Zuführen einer Metallschmelze und eine Schiebeeinheit, die einen Schieber und ein Drucksystem umfasst. Der Schieber ist zwischen dem Kanal und mindestens einer Spritzgusskavität angeordnet und ist zwischen einer Ruheposition und einer Spritzposition beweglich. Der Schieber blockiert in der Ruheposition den Zugang der Metallschmelze zu der Spritzgusskavität und ermöglicht in der Spritzposition den Zugang der Metallschmelze zu der Spritzgusskavität. Das Drucksystem hält den Schieber in der Ruheposition und ermöglicht bei einem Überschreiten eines Mindestdrucks die Bewegung des Schiebers in die Spritzposition.

## Beschreibung

### Technisches Gebiet

Die vorliegende Erfindung betrifft ein Spritzgusssystem für den Spritzguss von amorphen Metallen, eine Spritzgusseinheit für den Spritzguss von amorphen Metallen und ein Spritzgussverfahren für amorphe Metalle. Das Spritzgusssystem, die Spritzgusseinheit und das Spritzgussverfahren können natürlich auch für andere Arten von Metallen oder Metallverbunden eingesetzt werden.

### Hintergrund der Erfindung

Von amorphen Metallen spricht man, wenn Metalllegierungen auf atomarer Ebene keine kristalline, sondern eine amorphe Struktur aufweisen. Üblicherweise wird eine solche ungeordnete Struktur durch schnelles Abkühlen einer Schmelze erreicht. "Schnelles Abkühlen" bedeutet, dass sich die Atome oder Moleküle beim Abkühlen nicht mehr regelmäßig anordnen können.

Bei dem Spritzguss von Metallen und insbesondere amorphen Metallen wird eine bestimmte Menge Material zugeführt, in einer Schmelzkammer erwärmt, geschmolzen und anschließend eingeschossen bzw. eingespritzt, d.h. meist mit einem Kolben in ein Spritzgusswerkzeug gedrückt.

Durch die Lage der Schmelzkammer bzw. des Schmelzprozesses muss das aufgeschmolzen Material zunächst einen bestimmten Weg zurücklegen bevor es bei dem Spritzgusswerkzeug bzw. der oder den Kavitäten ankommt. Der Einspritzvorgang beginnt, sobald das Vormaterial vollständig aufgeschmolzen ist. Dabei kann es zum so genannten Vorlaufen kommen: Die Teile des verflüssigten Materials, die sich in der Schmelzkammer näher am Werkzeug befinden, gelangen früher in das Werkzeug.

Durch das Vorlaufen der Schmelze in eine Kavität wird die Schmelze an der vorlaufenden Stelle meist zu schnell abkühlen und verhindert damit ein vollständiges Füllen der Kavität mit der Schmelze und/oder ein Füllen mit ausreichender Temperatur um insbesondere ein amorphes Abkühlen zu gewährleisten. Ein weiteres Problem stellt bei umlaufenden (zum Beispiel ringförmigen) Teilen die zusammenlaufende Stelle da, ist diese meist nicht heiß genug wird und dann eine Verbindung der Schmelzfronten beeinträchtigt. An der zusammenlaufenden Stelle kann es dann zu Fließlinien, verminderten Haltbarkeiten und Bruch kommen. Vorrichtungen und Verfahren zum Spritzgießen von insbesondere amorphen Metallen können daher noch weiter verbessert werden.

### Zusammenfassung der Erfindung

Es ist eine Aufgabe der vorliegenden Erfindung, ein verbessertes Spritzgusssystem für den Spritzguss von Metallen bereitzustellen, welches insbesondere für den Spritzguss von amorphen Metallen geeignet ist.

Diese Aufgabe wird durch ein Spritzgusssystem für den Spritzguss von amorphen Metallen nach den unabhängigen Ansprüchen gelöst. Vorteilhafte Ausführungsformen und Weiterbildungen sind den Unteransprüchen und der nachfolgenden Beschreibung zu entnehmen.

Die vorliegende Erfindung umfasst ein Spritzgusssystem für den Spritzguss von amorphen Metallen. Das Spritzgusssystem umfasst einen Kanal zum Zuführen einer Metallschmelze und eine Schiebeeinheit, die einen Schieber und ein Drucksystem umfasst. Der Schieber ist zwischen dem Kanal und mindestens einer Spritzgusskavität angeordnet und ist zwischen einer Ruheposition und einer Spritzposition beweglich. Der Schieber blockiert in der Ruheposition den Zugang der Metallschmelze zu der Spritzgusskavität und ermöglicht in der Spritzposition den Zugang der Metallschmelze zu der Spritzgusskavität. Das Drucksystem hält den Schieber in der Ruheposition und ermöglicht bei einem Überschreiten eines Mindestdrucks die Bewegung des Schiebers in die Spritzposition.

Der Schieber und das Drucksystem können so einen druckgesteuerten Einspritzschieber bilden, der den Weg in eine oder mehrere Spritzgusskavitäten verschlossen hält, bis eine voreingestellte Druckgrenze erreicht ist, und sich der Schieber dann ruckartig öffnet und dadurch den Weg in die Spritzgusskavität(en) des Spritzgusswerkzeuges öffnet. Die Spritzgusskavität kann ein Bauteil oder nur eine Schicht auf einem Bauteil sein.

Mit dem vorliegenden Spritzgusssystem kann ein ungleichmäßiges Einspritzen verhindert oder zumindest reduziert werden. Insbesondere kann ein ungleichmäßiges Vorlaufen in die Spritzgusskavität(en) verhindert oder reduziert werden. Auf diese Weise wird ein unvollständiges Füllen der Spritzgusskavität(en) und/oder ein Füllen bei suboptimaler Temperatur verhindert oder reduziert, was ein Abkühlen mit ausreichender Abkühlgeschwindigkeit des eingespritzten Metalls zum Erreichen amorpher Eigenschaften ermöglicht oder zumindest erleichtert. Weiterhin wird eine Herstellung von umlaufenden bzw. ringförmigen Bauteilen erleichtert, da eine Verbindung der Schmelzfronten an der zusammenlaufenden Stelle erleichtert wird, was die Haltbarkeit des Bauteils verbessert.

Das vorliegende Spritzgusssystem ermöglicht auch die Verwendung geringerer Einspritzgeschwindigkeiten bzw. Kolbengeschwindigkeiten und erlaubt damit einen geringeren Materialverschleiß. Das vorliegende Spritzgusssystem verbessert das Einspritzen an sich und erlaubt damit die Verwendung von mehreren Spritzgusskavitäten, was die Fertigungskosten reduziert. Das verbesserte Einspritzen ermöglicht auch die Herstellung von länglichen und/oder dünnen Bauteilen.

Der Mindestdruck kann ein vordefinierter Druck der Metallschmelze auf den Schieber sein. Der Mindestdruck kann auch ein vordefinierter Spritzdruck der Metallschmelze in den Kanal sein.

In einer Ausführungsform ist eine Druckrichtung des Schiebers im Wesentlichen parallel zu einer Einflussrichtung der Metallschmelze.

In einer Ausführungsform umfasst das Drucksystem eine Vielzahl von Druckstäben, die zwischen einer Halteposition und einer Freigabeposition beweglich sind. Die Druckstäbe greifen in der Halteposition in eine Außenkante des Schiebers ein und halten den Schieber in der Ruheposition. In der Freigabeposition geben die Druckstäbe die Außenkante des Schiebers frei und ermöglichen eine Bewegung des Schiebers in die Spritzposition.

In einer Ausführungsform weist der Schieber eine Vielzahl von Einkerbungen oder Nuten auf, die entlang der Außenkante des Schiebers angeordnet sind. Jeweils eine der Einkerbungen ist zur Aufnahme jeweils eines der Druckstäbe gestaltet.

In einer Ausführungsform weisen die Druckstäbe an ihren dem Schieber zugewandten Enden Kugeln auf. In anderen Worten, zumindest einige der Druckstäbe können an ihren freien Enden jeweils eine Kugel oder eine Walze aufweisen. Durch den Einsatz der Druckstäbe mit Kugeln kann nur axial Kraft aufgenommen werden, wenn die Druckstäbe in den Schieber eingreifen bzw. einrasten. Auf diese Weise reicht die relativ geringe Kraft des Auswerfers aus, um den Schieber nach seinem Einsatz zurück in seine Ruheposition zu schieben, in der die Druckstäbe erneut in dem Schieber einrasten.

In einer Ausführungsform sind die Druckstäbe in Richtung des Schiebers vorgespannt. Die Druckstäbe greifen in ihrer Halteposition in den Schieber ein und halten ihn in seiner Ruheposition. Beim Überschreiten des Mindestdrucks der Metallschmelze wird die Vorspannung überwunden, sodass die Druckstäbe in die Freigabeposition wechseln und den Schieber freigeben, der dann in seine Spritzposition wechselt.

Der Schieber kann gegenüber dem Kanal bzw. einer Einspritzkammer sitzen. Der Schieber kann direkt im Werkzeug oder in einem Einsatz geführt werden. In einer Ausführungsform umfasst das Spritzgusssystem weiterhin eine Hülse, in der die Druckstäbe gelagert sind. Die Hülse kann den Schieber U-förmig oder ringförmig umgreifen. Die Druckstäbe können an einem Ende der Hülse angeordnet sein. Das Spritzgusssystem kann 10 bis 20 Druckstäbe umfassen, natürlich sind auch andere Mengen möglich. Zum Beispiel können in einer Hülse 16 Druckstäbe angeordnet sein, die vorzugsweise auf zwei versetzt angeordneten Kreisen entlang eines Umfangs der Hülse verteilt sind. Die Druckstäbe greifen in den Schieber ein. Wird der vordefinierte Mindestdruck ausgeübt bzw. überschritten, so können die Druckstäbe radial nach außen gehen und der Schieber kann sich schlagartig nach hinten bewegen. Durch die Hülse kann ein Auswerfer für das gespritzte Bauteil verlaufen.

In einer Ausführungsform sind die Vielzahl von Druckstäben in einer Reihe entlang einer Außenkante des Schiebers angeordnet. In einer anderen Ausführungsform sind die Vielzahl von Druckstäben in zwei oder mehr Reihen entlang einer Außenkante des Schiebers angeordnet. Die zwei oder mehr Reihen von Druckstäben liegen dann beanstandet voneinander bzw. versetzt zueinander. Sie bilden also Ringe, die sich nicht schneiden. In anderen Worten, in einer Ausführungsform sind die mehreren Reihen von Druckstäben ringförmig nebeneinander an der Außenkante des Schiebers angeordnet. In einer anderen Ausführungsform umlaufen die mehreren Reihen von Druckstäben die Außenkante des Schiebers spiralförmig. In diesem Fall bilden die Druckstäbe eine Spur, die sich um den Schieber herum windet bzw. um den Schieber herumgewickelt ist.

In einer Ausführungsform umfasst das Drucksystem eine Feder, eine Hydraulik, eine Pneumatik, einen Elektromotor oder ähnliches, welche(r) den Schieber in der Ruheposition hält und beim Überschreiten des Mindestdrucks den Schieber zur Bewegung in die Spritzposition freigibt.

In einer Ausführungsform umfasst das Drucksystem mindestens eine Klemme, die den Schieber in der Ruheposition hält und beim Überschreiten des Mindestdrucks den Schieber zur Bewegung in die Spritzposition freigibt.

In einer Ausführungsform umfasst das Drucksystem mindestens einen Magneten, der den Schieber in der Ruheposition hält und beim Überschreiten des Mindestdrucks den Schieber zur Bewegung in die Spritzposition freigibt.

Die oben genannten Ausführungsmöglichkeiten des Drucksystems können ebenfalls in der Hülse gelagert sein.

In einer Ausführungsform umfasst das Spritzgusssystem weiterhin einen Kolben zum Schieben der Metallschmelze durch den Kanal. Auch eine Kopplung des Schiebers an die Lage des Kolbens ist möglich.

Die vorliegende Erfindung umfasst weiterhin eine Spritzgusseinheit für den Spritzguss von amorphen Metallen. Die Spritzgusseinheit umfasst ein Spritzgusssystem, wie im Vorherigen beschrieben, und mindestens eine Spritzgusskavität. Das Spritzgusssystem umfasst einen Kanal zum Zuführen einer Metallschmelze und eine Schiebeeinheit, wobei ein Schieber der Schiebeeinheit zwischen dem Kanal und der Spritzgusskavität angeordnet ist.

In einer Ausführungsform umfasst die Spritzgusseinheit mehrere Spritzgusskavitäten, wobei der Schieber in einer Ruheposition den Zugang der Metallschmelze zu den Spritzgusskavitäten blockiert und in einer Spritzposition den Zugang der Metallschmelze zu den Spritzgusskavitäten ermöglicht. Vorzugsweise umfasst die Spritzgusseinheit drei bis fünf und weiter bevorzugt vier Spritzgusskavitäten.

Die vorliegende Erfindung umfasst weiterhin ein Spritzgussverfahren für amorphe Metalle, umfassend die folgenden Schritte, nicht notwendigerweise in dieser Reihenfolge:
- Zuführen einer Metallschmelze durch einen Kanal,
- Blockieren der Metallschmelze durch eine Schiebeeinheit. Die Schiebeeinheit umfasst ein Schieber und ein Drucksystem. Der Schieber ist zwischen dem Kanal und mindestens einer Spritzgusskavität angeordnet und zwischen einer Ruheposition und einer Spritzposition beweglich. Der Schieber blockiert in der Ruheposition den Zugang der Metallschmelze zu der Spritzgusskavität. Das Drucksystem hält den Schieber in der Ruheposition.
- Freigeben der Metallschmelze durch die Schiebeeinheit, in dem das Drucksystem beim Überschreiten eines Mindestdrucks von der Halteposition in die Freigabeposition wechselt. Das ermöglicht bei einem Überschreiten eines Mindestdrucks die Bewegung des Schiebers in die Spritzposition.

Es gibt diverse Möglichkeiten den Schieber zurück in die Halteposition zu fahren, unter anderem durch eine Hydraulik, eine Pneumatik, einen Elektromotor, manuell usw. In einer Ausführungsform umfasst die Spritzgusseinheit weiterhin ein Zurückfahren des Schiebers in die Ruheposition zusammen mit einem Auswerfen eines gespritzten Werkstücks. Dafür verläuft ein Auswerfer so, dass er gleichzeitig (in einer Bewegung) das Werkstück auswirft und den Schieber in die Halteposition zurückdrückt. Dies gelingt insbesondere dadurch, dass der Schieber gemäß der vorliegenden Erfindung so leicht und leichtgängig ist.

In einer Ausführungsform wird das Zuführen der Metallschmelze durch den Kanal durchgeführt mit Geschwindigkeiten von mindestens 100 mm/s oder maximal 1000 mm/s oder mit Geschwindigkeiten zwischen 100 m/s und 1000 m/s oder vorzugsweise mit Geschwindigkeiten zwischen 300 m/s und 700 m/s oder noch weiter bevorzugt mit Geschwindigkeiten zwischen 400 m/s und 600 m/s.

In einer Ausführungsform wird das Zuführen der Metallschmelze im Bereich der Kavität(en) mit einem Druck größer/gleich 50 oder 60 bar durchgeführt, vorzugsweise zwischen 500 und 3000 bar durchgeführt, weiter vorzugsweise mit einem Druck zwischen 1000 und 2000 bar. Der Druck kann mithilfe des Kolbens aufgebaut werden, dies ist aber nicht zwingend notwendig.

In einer Ausführungsform beträgt eine mögliche Einspritzlänge oder Einspritztiefe 3 bis 15 cm. Die Einspritzlänge beschreibt dabei den längsten Weg vom Einspritzpunkt bis zum Bauteilende.

Weitere Merkmale, Vorteile und Anwendungsmöglichkeiten der vorliegenden Erfindung ergeben sich aus der nachfolgenden Beschreibung, den Ausführungsbeispielen und den Figuren. Alle beschriebenen und/oder bildlich dargestellten Merkmale können unabhängig von ihrer Darstellung in einzelnen Ansprüchen, Figuren, Sätzen oder Absätzen miteinander kombiniert werden. In den Figuren stehen gleiche Bezugszeichen für gleiche oder ähnliche Objekte.

### Kurze Beschreibung der Figuren

- Figur 1: zeigt einen schematischen Querschnitt durch eine Spritzgusseinheit mit einem Spritzgusssystem für den Spritzguss von amorphen Metallen gemäß einer Ausführungsform in einer Ruheposition.
- Figur 2: zeigt einen schematischen Querschnitt eine Spritzgusseinheit mit einem Spritzgusssystem für den Spritzguss von amorphen Metallen gemäß einer Ausführungsform in einer Spritzposition.
- Figuren 3a-d: zeigt schematisch ein Spritzgussverfahren für amorphe Metalle.

### Detaillierte Beschreibung der Ausführungsbeispiele

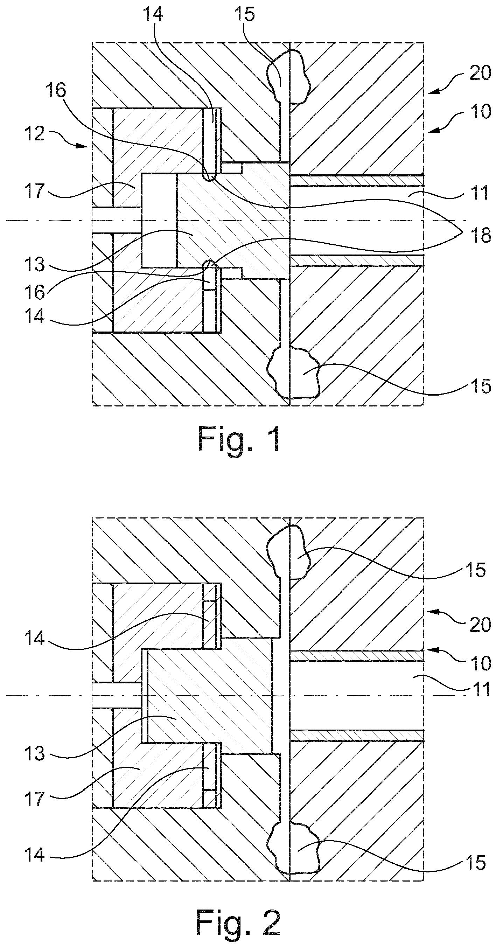

Die Figuren 1 und 2 zeigen jeweils eine Spritzgusseinheit 20 für den Spritzguss von amorphen Metallen. Die Spritzgusseinheit 20 umfasst ein Spritzgusssystem 10 und mehrere Spritzgusskavitäten 15. Das Spritzgusssystem 10 umfasst einen Kanal 11 zum Zuführen einer Metallschmelze und eine Schiebeeinheit 12, wobei ein Schieber 13 der Schiebeeinheit 12 zwischen dem Kanal 11 und den Spritzgusskavitäten 15 angeordnet ist. Die Druckrichtung des Schiebers 13 ist parallel, aber entgegengesetzt zu einer Einflussrichtung der Metallschmelze 30. **Figur 1** zeigt die Spritzgusseinheit 20 in einem geschlossenen Zustand des druckgesteuerten Schiebers 13. **Figur 2** zeigt die Spritzgusseinheit 20 in einem offenen Zustand des druckgesteuerten Schiebers 13.

Die Schiebeeinheit 12 umfasst den Schieber 13. Der Schieber 13 sitzt gegenüber dem Kanal 11 bzw. einer Einspritzkammer. Der Schieber 13 ist zwischen dem Kanal 11 und den Spritzgusskavitäten 15 angeordnet. Er ist zwischen einer Ruheposition (siehe Figur 1) und einer Spritzposition (siehe Figur 2) beweglich. Der Schieber 13 blockiert in der Ruheposition (siehe Figur 1) den Zugang der Metallschmelze zu den Spritzgusskavitäten 15 und ermöglicht in der Spritzposition (siehe Figur 2) den Zugang der Metallschmelze zu den Spritzgusskavitäten 15.

Die Schiebeeinheit 12 umfasst ein Drucksystem in Form einer Vielzahl von Druckstäben 14. Die Druckstäbe 14 sind an dem Schieber 13 angeordnet und zwischen einer Halteposition (siehe Figur 1) und einer Freigabeposition (siehe Figur 2) beweglich. Die Druckstäbe 14 halten in der Halteposition (siehe Figur 1) den Schieber 13 in der Ruheposition und ermöglichen in der Freigabeposition (siehe Figur 2) eine Bewegung des Schiebers 13 in die Spritzposition. Die Druckstäbe 14 wechseln beim Überschreiten eines Mindestdrucks der Metallschmelze auf den Schieber 13 von der Halteposition (siehe Figur 1) in die Freigabeposition (siehe Figur 2). Die Druckstäbe 14 sind in einer Reihe entlang einer Außenkante des Schiebers 13 angeordnet, hier sind nur zwei sichtbar.

Der Schieber 13 und die Druckstäbe 14 bilden einen druckgesteuerten Einspritzschieber, der den Weg in die Spritzgusskavitäten 15 verschlossen hält, bis eine voreingestellte Druckgrenze (Druck der Metallschmelze 30 auf den Schieber 13 oder Spritzdruck der Metallschmelze 30 in den Kanal) erreicht ist, und sich der Schieber 13 ruckartig öffnet und dadurch den Weg in die Spritzgusskavitäten 15 des Spritzgusswerkzeuges öffnet.

Das Spritzgusssystem 10 umfasst weiterhin eine Hülse 17, in der die Druckstäbe 14 gelagert sind. Die Hülse 17 umgreift den Schieber 13 U-förmig. Die Druckstäbe 14 sind an den freien Enden der Hülse 17 angeordnet. Die Druckstäbe 14 greifen in den Schieber 13 ein. Wird der vordefinierte Mindestdruck ausgeübt bzw. überschritten, so können die Druckstäbe 14 radial nach außen gehen und der Schieber 13 kann sich schlagartig nach hinten bewegen. Durch die Hülse 17 verläuft ein Auswerfer für das gespritzte Bauteil.

Die Druckstäbe 14 weisen an ihren dem Schieber 13 zugewandten Enden Kugeln 18 auf. Durch den Einsatz der Druckstäbe 14 mit Kugeln 18 kann nur axial Kraft aufgenommen werden, wenn die Druckstäbe 14 in den Schieber 13 eingreifen bzw. einrasten. Auf diese Weise reicht die relativ geringe Kraft des Auswerfers aus, um den Schieber 13 nach seinem Einsatz zurück in seine Ruheposition zu schieben, in der die Druckstäbe 14 erneut in dem Schieber 13 einrasten.

Der Schieber 13 weist eine Vielzahl von Einkerbungen 16 auf, die entlang einer Außenkante des Schiebers 13 angeordnet sind. Jeweils eine der Einkerbungen 16 ist zur Aufnahme jeweils eines der Druckstäbe 14 mit Kugeln 18 gestaltet.

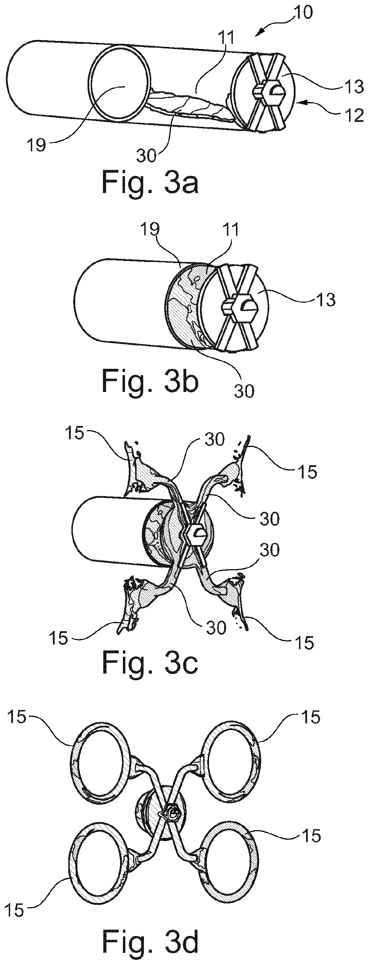

**Figur 3** zeigt schematisch den Fluss einer Schmelze in die Kavität(en) schematisch und erlaubt das Erläutern des vorliegenden Spritzgussverfahrens für amorphe Metalle. Das Spritzgussverfahren kann die folgenden Schritte umfassen, nicht notwendigerweise in dieser Reihenfolge:
- Zuführen einer Metallschmelze 30 durch einen Kanal 11 (siehe Figur 3a).
- Blockieren der Metallschmelze 30 durch eine Schiebeeinheit 12 (siehe Figuren 3a und 3b). Die Schiebeeinheit 12 umfasst ein Schieber 13, der zwischen dem Kanal 11 und den Spritzgusskavitäten 15 angeordnet ist und zwischen einer Ruheposition und einer Spritzposition beweglich ist. Der Schieber 13 blockiert in der in den Figuren 3a und 3b gezeigten Ruheposition den Zugang der Metallschmelze 30 zu den vier ringförmigen Spritzgusskavitäten 15. In anderen Worten, der Schieber 13 ist geschlossen, es wird Druck aufgebaut.
- Freigeben der Metallschmelze 30 durch die Schiebeeinheit 12 (siehe Figur 3c), in dem der Schieber 13 beim Überschreiten eines Mindestdrucks den Schieber 13 öffnet. Der Schieber 13 wechselt in seine Spritzposition, die den Zugang der Metallschmelze 30 zu den Spritzgusskavitäten 15 ermöglicht. Der Einspritzvorgang in die Spritzgusskavitäten 15 beginnt. In der Figur 3d ist der Einspritzvorgang abgeschlossen, die Spritzgusskavitäten 15 sind gefüllt.

Ergänzend sei darauf hingewiesen, dass "umfassend" und "aufweisend" keine anderen Elemente oder Schritte ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Ein Spritzgusssystem (10) für den Spritzguss von amorphen Metallen, umfassend:
- einen Kanal (11) zum Zuführen einer Metallschmelze (30), und
- eine Schiebeeinheit (12), die einen Schieber (13) und ein Drucksystem umfasst,
wobei der Schieber (13) zwischen dem Kanal (11) und mindestens einer Spritzgusskavität (15) angeordnet ist,
wobei der Schieber (13) zwischen einer Ruheposition und einer Spritzposition beweglich ist, wobei der Schieber (13) in der Ruheposition den Zugang der Metallschmelze (30) zu der Spritzgusskavität (15) blockiert und in der Spritzposition den Zugang der Metallschmelze (30) zu der Spritzgusskavität (15) ermöglicht,
wobei das Drucksystem den Schieber (13) in der Ruheposition hält und bei einem Überschreiten eines Mindestdrucks die Bewegung des Schiebers (13) in die Spritzposition ermöglicht.

2. Spritzgusssystem (10) nach Anspruch 1, wobei der Mindestdruck ein vordefinierter Druck der Metallschmelze (30) auf den Schieber (13) oder ein vordefinierter Spritzdruck der Metallschmelze (30) in den Kanal (11) ist.

3. Spritzgusssystem (10) nach einem der vorherigen Ansprüche, wobei das Drucksystem eine Vielzahl von Druckstäben (14) umfasst, die zwischen einer Halteposition und einer Freigabeposition beweglich sind, wobei die Druckstäbe in der Halteposition in eine Außenkante des Schiebers (13) eingreifen und den Schieber (13) in der Ruheposition halten und in der Freigabeposition die Außenkante des Schiebers (13) freigeben und eine Bewegung des Schiebers (13) in die Spritzposition ermöglichen.

4. Spritzgusssystem nach dem vorherigen Anspruch, wobei der Schieber (13) eine Vielzahl von Einkerbungen (16) aufweist, die entlang der Außenkante des Schiebers (13) angeordnet sind und jeweils eine der Einkerbungen (16) zur Aufnahme jeweils eines der Druckstäbe (14) gestaltet ist.

5. Spritzgusssystem (10) nach einem der Ansprüche 3 bis 4, wobei die Schiebeeinheit (12) weiterhin eine Hülse (17) umfasst, in der die Druckstäbe (14) gelagert sind.

6. Spritzgusssystem (10) nach einem der Ansprüche 3 bis 5, wobei die Druckstäbe (14) an ihren dem Schieber (13) zugewandten Enden Kugeln (18) aufweisen.

7. Spritzgusssystem (10) nach Anspruch 1, wobei das Drucksystem eine Feder, eine Hydraulik, eine Pneumatik oder einen Elektromotor umfasst, welche(r) den Schieber (13) in der Ruheposition hält und beim Überschreiten des Mindestdrucks den Schieber (13) zur Bewegung in die Spritzposition freigibt.

8. Spritzgusssystem (10) nach Anspruch 1, wobei das Drucksystem mindestens eine Klemme umfasst, die den Schieber (13) in der Ruheposition hält und beim Überschreiten des Mindestdrucks den Schieber (13) zur Bewegung in die Spritzposition freigibt.

9. Spritzgusssystem (10) nach Anspruch 1, wobei das Drucksystem mindestens einen Magneten umfasst, der den Schieber (13) in der Ruheposition hält und beim Überschreiten des Mindestdrucks den Schieber (13) zur Bewegung in die Spritzposition freigibt.

10. Spritzgusssystem (10) nach einem der vorherigen Ansprüche, wobei eine Druckrichtung des Schiebers (13) im Wesentlichen parallel zu einer Einflussrichtung der Metallschmelze (30) ist.

11. Spritzgusssystem (10) nach einem der vorherigen Ansprüche, weiterhin umfassend einen Kolben (19) zum Schieben der Metallschmelze (30) durch den Kanal (11).

12. Eine Spritzgusseinheit (20) für den Spritzguss von amorphen Metallen, umfassend:
- ein Spritzgusssystem (10) nach einem der vorigen Ansprüche, und
- mindestens eine Spritzgusskavität (15),
wobei das Spritzgusssystem (10) einen Kanal (11) zum Zuführen einer Metallschmelze (30) und eine Schiebeeinheit (12) umfasst, und wobei ein Schieber (13) der Schiebeeinheit (12) zwischen dem Kanal (11) und der Spritzgusskavität (15) angeordnet ist.

13. Spritzgusseinheit (20) nach dem vorherigen Anspruch, wobei die Spritzgusseinheit (20) mehrere Spritzgusskavitäten (15) umfasst, vorzugsweise vier Spritzgusskavitäten (15), und wobei der Schieber (13) in einer Ruheposition den Zugang der Metallschmelze (30) zu den Spritzgusskavitäten (15) blockiert und in einer Spritzposition den Zugang der Metallschmelze (30) zu den Spritzgusskavitäten (15) ermöglicht.

14. Ein Spritzgussverfahren für amorphe Metalle, umfassend:
- Zuführen einer Metallschmelze (30) durch einen Kanal (11),
- Blockieren der Metallschmelze (30) durch eine Schiebeeinheit (12), wobei die Schiebeeinheit (12) einen Schieber (13) und ein Drucksystem umfasst, wobei der Schieber (13) zwischen dem Kanal (11) und mindestens einer Spritzgusskavität (15) angeordnet ist,
wobei der Schieber (13) zwischen einer Ruheposition und einer Spritzposition beweglich ist und der Schieber (13) in der Ruheposition den Zugang der Metallschmelze (30) zu der Spritzgusskavität (15) blockiert, wobei das Drucksystem den Schieber (13) in der Ruheposition hält, und
- Freigeben der Metallschmelze (30) durch die Schiebeeinheit (12), in dem das Drucksystem beim Überschreiten eines Mindestdrucks die Bewegung des Schiebers (13) in die Spritzposition ermöglicht, und wobei der Schieber (13) in der Spritzposition den Zugang der Metallschmelze (30) zu der Spritzgusskavität (15) ermöglicht.

15. Spritzgussverfahren nach dem vorherigen Anspruch, weiterhin umfassend ein Zurückfahren des Schiebers (13) in die Ruheposition zusammen mit einem Auswerfen eines gespritzten Werkstücks.

## Geänderte Patentansprüche

### Geänderte Patentansprüche gemäss Regel 137(2) EPÜ.

1. Eine Spritzgusseinheit (20) für den Spritzguss von amorphen Metallen, umfassend:
- einen Kanal (11) zum Zuführen einer Metallschmelze (30),
- mindestens eine Spritzgusskavität (15), und
- ein Spritzgusssystem (10),
wobei das Spritzgusssystem (10) eine Schiebeeinheit (12) mit einem Schieber (13) und einem Drucksystem umfasst,
wobei der Schieber (13) zwischen dem Kanal (11) und der Spritzgusskavität (15) angeordnet ist,
wobei der Schieber (13) zwischen einer Ruheposition und einer Spritzposition beweglich ist, wobei der Schieber (13) in der Ruheposition den Zugang der Metallschmelze (30) zu der Spritzgusskavität (15) blockiert und in der Spritzposition den Zugang der Metallschmelze (30) zu der Spritzgusskavität (15) ermöglicht,
wobei das Drucksystem eine Vielzahl von Druckstäben (14) umfasst, die zwischen einer Halteposition und einer Freigabeposition beweglich sind, wobei die Druckstäbe in der Halteposition in eine Außenkante des Schiebers (13) eingreifen und den Schieber (13) in der Ruheposition halten und wobei die Druckstäbe in der Freigabeposition bei einem Überschreiten eines Mindestdrucks die Außenkante des Schiebers (13) freigeben und die Bewegung des Schiebers (13) in die Spritzposition ermöglichen.

2. Spritzgusseinheit (20) nach Anspruch 1, wobei der Mindestdruck ein vordefinierter Druck der Metallschmelze (30) auf den Schieber (13) oder ein vordefinierter Spritzdruck der Metallschmelze (30) in den Kanal (11) ist.

3. Spritzgusseinheit (20) nach Anspruch 1, wobei der Schieber (13) eine Vielzahl von Einkerbungen (16) aufweist, die entlang der Außenkante des Schiebers (13) angeordnet sind und jeweils eine der Einkerbungen (16) zur Aufnahme jeweils eines der Druckstäbe (14) gestaltet ist.

4. Spritzgusseinheit (20) nach einem der Ansprüche 1 oder 3, wobei die Schiebeeinheit (12) weiterhin eine Hülse (17) umfasst, in der die Druckstäbe (14) gelagert sind.

5. Spritzgusseinheit (20) nach einem der Ansprüche 1 oder 3-4, wobei die Druckstäbe (14) an ihren dem Schieber (13) zugewandten Enden Kugeln (18) aufweisen.

6. Spritzgusseinheit (20) nach Anspruch 1, wobei das Drucksystem eine Feder, eine Hydraulik, eine Pneumatik oder einen Elektromotor umfasst, welche(r) den Schieber (13) in der Ruheposition hält und beim Überschreiten des Mindestdrucks den Schieber (13) zur Bewegung in die Spritzposition freigibt.

7. Spritzgusseinheit (20) nach Anspruch 1, wobei das Drucksystem mindestens eine Klemme umfasst, die den Schieber (13) in der Ruheposition hält und beim Überschreiten des Mindestdrucks den Schieber (13) zur Bewegung in die Spritzposition freigibt.

8. Spritzgusseinheit (20) nach Anspruch 1, wobei das Drucksystem mindestens einen Magneten umfasst, der den Schieber (13) in der Ruheposition hält und beim Überschreiten des Mindestdrucks den Schieber (13) zur Bewegung in die Spritzposition freigibt.

9. Spritzgusseinheit (20) nach einem der vorherigen Ansprüche, wobei eine Druckrichtung des Schiebers (13) im Wesentlichen parallel zu einer Einflussrichtung der Metallschmelze (30) ist.

10. Spritzgusseinheit (20) nach einem der vorherigen Ansprüche, weiterhin umfassend einen Kolben (19) zum Schieben der Metallschmelze (30) durch den Kanal (11).

11. Spritzgusseinheit (20) nach dem vorherigen Anspruch, wobei die Spritzgusseinheit (20) mehrere Spritzgusskavitäten (15) umfasst, vorzugsweise vier Spritzgusskavitäten (15), und wobei der Schieber (13) in einer Ruheposition den Zugang der Metallschmelze (30) zu den Spritzgusskavitäten (15) blockiert und in einer Spritzposition den Zugang der Metallschmelze (30) zu den Spritzgusskavitäten (15) ermöglicht.

12. Ein Spritzgussverfahren für amorphe Metalle, umfassend:
- Zuführen einer Metallschmelze (30) durch einen Kanal (11),
- Blockieren der Metallschmelze (30) durch eine Schiebeeinheit (12), wobei die Schiebeeinheit (12) einen Schieber (13) und ein Drucksystem mit einer Vielzahl von Druckstäben (14) umfasst, wobei der Schieber (13) zwischen dem Kanal (11) und mindestens einer Spritzgusskavität (15) angeordnet ist, wobei der Schieber (13) zwischen einer Ruheposition und einer Spritzposition beweglich ist, wobei die Druckstäbe (14) zwischen einer Halteposition und einer Freigabeposition beweglich sind, und in der Halteposition in eine Außenkante des Schiebers (13) eingreifen und dadurch der Schieber (13) in der Ruheposition den Zugang der Metallschmelze (30) zu der Spritzgusskavität (15) blockiert, wobei das Drucksystem den Schieber (13) in der Ruheposition hält, und
- Freigeben der Metallschmelze (30) durch die Schiebeeinheit (12), in dem die Vielzahl von Druckstäben des Drucksystems beim Überschreiten eines Mindestdrucks die Außenkante des Schiebers (13) freigeben und dadurch in der Freigabeposition die Bewegung des Schiebers (13) in die Spritzposition ermöglicht, und wobei der Schieber (13) in der Spritzposition den Zugang der Metallschmelze (30) zu der Spritzgusskavität (15) ermöglicht.

13. Spritzgussverfahren nach dem vorherigen Anspruch, weiterhin umfassend ein Zurückfahren des Schiebers (13) in die Ruheposition zusammen mit einem Auswerfen eines gespritzten Werkstücks.
